# EUROPEAN PATENT SPECIFICATION

(11) **EP 1 849 826 B1**
(45) Date of publication and mention of the grant of the patent: **27.03.2013**
(21) Application number: 06008693.1
(22) Date of filing: 26.04.2006
(51) Int. Cl.: C08L 23/10, C08K 5/00

(54) **A transparent polyolefin article which is subjected to a heat treatment**
Transparente Polyolefinartikel mit einer Wärmebehandlung
Article en transparentes polyoléfiniques soumis a un traitement thermique

(43) Date of publication of application: 31.10.2007
(73) Proprietor: Borealis Technology Oy, 06101 Porvoo (FI)
(72) Inventor: Grein, Christelle, 4020 Linz (AT); Wolfschwenger, Johannes, 4491 Niederneukirchen (DE); Grünberger, Manfred, 4040 Linz (AT); Wolfsberger, Anton, 4210 Gallneukirchen (AT)
(74) Representative: Kador & Partner

(56) References cited:
- EP-A- 0 444 671
- EP-A- 1 211 289
- EP-A- 1 236 769
- EP-A- 1 344 793
- EP-A- 1 510 547
- EP-A- 1 659 151
- US-A- 5 468 809

## Description

The invention relates to a transparent article comprising a polyolefin composition which has excellent optical properties and a high impact resistance before and after heat treatment.

Such an article is for instance a medical container, as a bag for filling blood, medicaments. Such a bag has to have a high heat resistance, capable of enduring sterilization treatment at high temperatures, high transparency, low haze optical properties to allow visual inspection of the content of the container, a high impact resistance to prevent the bag from rupturing, for instance when falling or during handling, packaging or transportation, and a high flexibility for facilitating the discharge of its content.

WO 2004/071375 discloses a medical container produced from a polyolefin composition comprising a propylene-base polymer as a mixture of a propylene polymer and an ethylene-propylene copolymer elastomer and an ethylene-base copolymer having an ethylene and at least one alpha-olefin with 4 carbon atoms or more. To improve the heat resistance and impact strength a layer of ethylene homopolymer or copolymer with high density is disposed on the inner and/or outer side of the container.

WO 2002/44272 Al discloses a polypropylene composition comprising a heterophasic propylene alpha-olefin copolymer comprising a polymer or copolymer of propylene and an alpha-olefin as matrix and a propylene alpha-olefin rubber copolymer and in addition an ethylene homopolymer or ethylene alpha-olefin copolymer having 4 to 10 carbon atoms, a high flowability and a density of less than 0.925 g/cm³ for making articles having an improved impact strength at low temperatures and good optical properties, in particular for food packaging and for deep freeze applications.

It is in an object of the present invention to provide the use of a polyolefin composition for manufacturing of an article which may be heat-treated at high temperatures, in particular a medical article which may be sterilized by heat treatment, without loosing its excellent optical and mechanical performance.

This object is attained with an article which has been subjected to heat treatment and has a high transparency and impact resistance before and after the heat treatment, comprising a polyolefin composition comprising
a) 75 to 98 wt.-% of a heterophasic propylene/alpha-olefin copolymer comprising a polymer or a copolymer of propylene and an alpha-olefin as matrix polymer and a propylene/alpha-olefin rubber copolymer, the XCS-fraction of the heterophasic copolymer being soluble in xylene at +23°C having an intrinsic viscosity of less than 2 dl/g, and,
b) 2 to 25 wt.-% of an ethylene homopolymer having a melt flow rate (MFR₂) of more than 10 g/10min and a density of less than 0.930 g/cm³.

The XCS-fraction of the heterophasic copolymer being soluble in xylene at +23°C, the intrinsic viscosity and the melt flow rate (MFR₂) are measured as stated below in "Description of measurement methods".

Surprisingly it has been found that an article comprising this polyolefin composition and that has been subjected to a heat treatment, has excellent optical properties and high impact resistance before and after the heat treatment.

The matrix polymer of the heterophasic copolymer a) is preferably a random propylene/ethylene copolymer with at least 3 mol-% ethylene comonomer. The ethylene comonomer improves the optical properties. However, usually, the propylene/ethylene copolymer does not contain more than 15, preferably not more than 10 mol-% ethylene comonomer.

Polyolefin compositions, comprising 85 to 95 wt.-%, in particular 88 to 92 wt.-% of the heterophasic copolymer a) and 5 to 15 wt.-% of the ethylene homopolymer are preferred.

The ethylene homopolymer b) has a high melt flow rate (MFR₂) of at least 10 g/10min, preferably of more than 15 g/10min, in particular more than 20 g/10min. If the melt flow rate (MFR₂) is less than 10 g/10min, the optical properties, particularly the haze, deteriorates significantly. The same is true when the density of the ethylene homopolymer b) is more than 0.930 g/cm³. Preferably, a low density polyethylene (LDPE) with a density of more than 0.900, in particular between 0.910 and 0.930 g/cm³ is used.

The polyolefin composition preferably comprises in addition 0.00001 to 1.0 wt.-% of an alpha-nucleating agent to further improve the transparency. As alpha-nucleating agent, for instance any commercially available alpha-nucleating agent can be used, for instance DMBDS, BNT or sodium benzoate.

The nucleation method, referred to as "BNT", is a special reactor technique, where the catalyst is prepolymerised with monomers like vinylcyclohexane (VCH). This method is described in greater detail in e.g. EP 0 316 187 A2. For the purpose of this invention "BNT" is referred to as an α-nucleating agent.

The composition may further comprise conventional additives, such as antioxidants, stabilizers, acid scavengers, clarifying agents, coloring agents, anti-UV-agents, antistatic agents, slip/mold release agents, fillers, like nanofillers. Typically, these additives may be present at less than 2 wt.-% each, more preferably less than 0.5 wt.-% relative to the total weight of the composition.

The article according to the present invention is subjected to heat treatment at a temperature of 129°C and more for more than two hours.

Preferably, the article according to the invention has a transparency of more than 90 % after heat treatment at 129°C for two hours, the decrease of transparency being not more than 3% after this heat treatment compared with the transparency before the heat treatment.

In addition, the article of the present invention has preferably a haze of less than 20 %, in particular less than 18 % after heat treatment at 129°C for two hours, the decrease of haze being preferably not more than 10 % after the heat treatment compared with the haze before the heat treatment.

Furthermore, the article according to the present invention has preferably a gloss of more than 20 %, in particular more than 25 % after heat treatment at 129°C for two hours, the decrease of gloss being preferably less than 25 %, in particular less than 20 % after the heat treatment compared with the gloss before the heat treatment.

Besides that, the article has preferably a clarity of more than 70% after heat treatment at 129°C for two hours, the decrease of clarity being preferably less than 10%, in particular less than 7% after the heat treatment compared with the clarity before the heat treatment.

In addition, the article of the present invention has a sufficiently high impact resistance before and after heat treatment. That means, the impact resistance before sterilization heat treatment at 129°C for two hours is preferably more than 13 J/mm and still more preferred 8 J/mm, in particular more than 9 J/mm after the heat treatment at 129°C for two hours, so that the decrease of impact resistance is not more than 5 J/mm, in particular less than 4 J/mm after the heat treatment.

The article according to the invention is preferably a medical article, as a container or a bag or a packaging material for medical purposes. The bag may be a bag for blood, medicaments. However, the article of the present invention can be any other article, subjected to a heat treatment, in particular heat sterilization. Generally, the article of the invention may be any medical article which consists nowadays for instance of polyvinyl chloride.

The heterophasic propylene/alpha-olefin copolymer may be produced by single- or multistage process polymerization of propylene and alpha-olefin and/or ethylene such as bulk polymerization, gas phase polymerization, slurry polymerization, solution polymerization or combinations thereof using conventional catalysts. Those processes are well-known to a person skilled in the art. A preferred process is a combination of bulk slurry loop reactor(s). The copolymer can be made either in a loop reactor or in a combination of loop and gas phase reactors. The polymer produced in this way may be transferred into another reactor, where e.g. a different propylene polymer is polymerized on top of the product of the first reactor, e.g. when propylene alpha-olefin rubber is polymerized. Preferably this polymerization step is done in a gas phase polymerization. As suitable catalyst for the polymerization of the propylene copolymer is any stereospecific catalyst for propylene polymerization which is capable of copolymerising propylene and comonomers at a temperature of 40 to 110°C and a pressure of 10 to 100 bar. Ziegler-Natta catalysts as well as metallocene catalysts are suitable catalysts.

A person skilled in the art is aware of the various possibilities to produce propylene copolymers and will simply find out a suitable procedure to produce suitable polymers which are used in the present invention.

The resulting polymer particles may be pelletized in conventional compounding extruder with various additives, which are generally used in thermoplastic polymer compositions as stated above. The polymer particles may be combined directly in a melt mixing operation with the ethylene homopolymer. The ethylene homopolymer may be any commercially available ethylene homopolymer having a density of less than 0.930 g/cm³ and a high melt flow rate of more than 10 g/10min.

It is preferred to use suitable ethylene homopolymers which are commercially available. Alternatively, suitable ethylene polymers may be produced according to the following description.

Low density polyethylene may be produced by free-radical-initiated polymerisation of ethylene using free radical initiators such as peroxide or oxygen in high pressure processes. The polymerisation is carried out in tubular or stirred autoclave reactors at a temperature of 130 to 330 °C and at a pressure around 700 to 3000 bars.

To produce the article of the polyolefin composition, normal techniques are used, such as injection molding, compression molding, blow molding (extrusion or injection stretch blow molding), extrusion (film, sheet, pipe, tube, profile extrusion), film blowing, thermoforming, casting. Containers may be made for instance by injection molding, blow molding or thermoforming, and films by film extrusion.

### Description of measurement methods

### XCS-fraction

The XCS-fraction of the heterophasic copolymer being soluble in xylene at +23°C was determined according to ISO 6427. The XCS-fraction is defined as the percent by weight that stays in solution after the polymer sample is dissolved in hot xylene and the solution is allowed to cool to +23°C. XCS largely correlates to the rubber content of the heterophasic copolymer.

### Intrinsic viscosity

The intrinsic viscosity (IV) is measured according to DIN ISO 1628-1 (October 1999) in decaline at 135°C.

### Melt flow rate (MFR₂)

The melt flow rates (MFR₂) were measured under a load of 2.16 kg at 230 °C (for polypropylene or the compositions of the invention) and 190 °C (for polyethylene).

### Comonomer content

Comonomer contents are measured with Fourier Transform Infrared Spectroscopy (FTIS) calibrated with 13C-NMR.

### Density

The density is measured according to ISO 1183.

### Optical properties

The optical properties, namely transparency, haze and gloss are measured with a cast film with a thickness of 100 µm.

Transparency, haze and clarity were determined according to ASTM D 1003-92. The gloss is determined according to ISO 2813 at an angle of 20°.

### Impact resistance

The impact resistance is measured as penetration energy Wtot with Dynatest according to DIN 53 373 on a cast film with a thickness of 100 µm

### Examples

As heterophasic propylene/alpha-olefin copolymer a) the same heterophasic propylene/ethylene copolymer is used in all Examples and Comparative Examples. The matrix polymer is a random propylene/ethylene copolymer with 4,5 wt-% ethylene comonomer. The XCS-fraction of the heterophasic copolymer being soluble in xylene at 23°C is 19 wt.-% and has an intrinsic viscosity of 1,7 dl/g. The overall ethylene content of the heterophasic copolymer is 10,1 wt%.

As ethylene homopolymer b) commercially available LDPE grades MA 9230, CA9150, MA820 and FT6230 of Borealis are used, as well as FG 5190, an ethylene copolymer with 1-butene. The melt flow rate (MFR2) and densities of the ethylene homopolymer grades and the copolymer grade are shown in Table 1 below:

**TABLE 1:**

| | (MFR₂) (g/min) | Density /g/cm³ |
|---|---|---|
| MA 9230 | 22 | 0.923 |
| CA 9150 | 15 | 0.915 |
| MA 8200 | 7 | 0.920 |
| FT 6230 | 2 | 0.923 |
| FG 5190 | 1.2 | 0.919 |

### Example 1

90 wt.-% of the heterophasic copolymer, 2000 ppm, 1,3:2,4 bis (3,4-dimethylbenzylidene sorbitol - DMBDS - (Millad 3988 from Milliken Corporation), an alpha-nucleating agent, and 10 wt.-% ethylene homopolymer MA 9230 were melt-mixed in a twin-screw extruder to obtain composition E1.

### Example 2

Example 1 was repeated, however, as ethylene homopolymer 10 wt.-% CA 9150 were used to obtain composition E2.

### Comparative Example 1

Example 1 was repeated, however, no ethylene homopolymer was used to obtain composition CE1.

### Comparative Examples 2 and 3

Example 1 was repeated, however, as ethylene homopolymer 10 wt.-% MA 8200 or FT 6230, respectively, were used to obtain compositions CE2 and CE3, respectively.

### Examples 3 and 4

Example 2 was repeated, and 5 wt.-% CA 9150 or 10 wt.-% CA 9150, respectively, were used, but no nucleating agent, to obtain compositions E3 and E4, respectively.

### Comparative Example 4

Example 1 was repeated, however, no ethylene homopolymer and no nucleating agent were used to obtain composition CE4.

### Comparative Example 5

Example 1 was repeated, however, 10 wt.-% FG 5190 and no nucleating agent were used to obtain composition CE5.

The melt flow rate (MFR2) of each composition E1 to E4 and CE1 to CE5 were determined as stated above in "Description of measurement methods".

Compositions E1 to E4 and CE1 to CE5 were extruded each as a cast film with a thickness of 100 µm.

Specimens of each extruded film E1 to E4 and CE1 to CE5 were subjected to a heat treatment for sterilization at 121°C and at 129°C for two hours.

The transparency, haze, clarity, gloss and the impact resistance of each film were determined as stated above in "Description of measurement methods". The results are shown in Table 2 below:

**TABLE 2:**

| | | | | Optics, before steril. | | | | Optics, steril 121°C/2h | | | | Optics steril.129°C/2h | | | | Impact resistance | | |
|---|---|---|---|---|---|---|---|---|---|---|---|---|---|---|---|---|---|---|
| Com positi on | Ethylene Homopolymer | Nucleation Millad 3988 | MFR [g/10min] | Transp. [%] | Haze [%] | Clarity [%] | Gloss [%] | Transp. [%] | Haze [%] | Clarity [%] | Gloss [%] | Transp. [%] | Haze [%] | Clarity [%] | Gloss [%] | Before steril. [J/mm] | Steril.121 °C [J/mm] | Steril.129°C [J/mm] |
| | | | | | | | | | | | | | | | | | | |
| CE1 | no | 2000 ppm | 3.2 | 92.8 | 10.4 | 73.6 | 46.9 | 91 | 20 | 70.5 | 13.6 | 90 | 24 | 67 | 8.5 | 13.8 | 8.6 | 8.4 |
| E1 | 10% MA9230 | 2000 ppm | 4.4 | 93 | 7.9 | 79.5 | 46.7 | 91.1 | 13.5 | 76.2 | 40.5 | 90.5 | 15.1 | 75.8 | 35.6 | 13.9 | 9.8 | 9.4 |
| E2 | 10% CA9150 | 2000 ppm | 4.4 | 93.1 | 9.1 | 77 | 48.1 | 91.6 | 14.6 | 73.2 | 33.3 | 91.5 | 17.2 | 72.1 | 28.3 | 14.2 | 9.7 | 9.2 |
| CE2 | 10% MA8200 | 2000 ppm | 4.2 | 92.8 | 11.1 | 66.1 | 45.4 | 90.9 | 24 | 58.3 | 28.4 | 90.4 | 27.9 | 55.6 | 24.8 | 13.3 | 9.5 | 9.0 |
| CE3 - | 10% FT6230 | 2000 ppm | 3.9 | 92.5 | 15.6 | 55.8 | 43.7 | 90.8 | 32.8 | 47.3 | 19.6 | 90.1 | 37.2 | 42 | 12.5 | 12.4 | 9.2 | 9.0 |
| CE4 | no | no | 3.4 | - | 6.1 | - | 62.3 | - | 15.3 | - | 40.7 | - | 23.2 | - | 23 | 26.1 | 9.5 | - |
| E3 | 5% CA 9150 | no | 3.3 | - | 8.3 | - | 57.2 | - | 13.9 | - | 46.6 | - | 20.3 | - | 42.7 | 26.2 | 9.3 | - |
| E4 | 10% CA9150 | no | 3.5 | - | 10 | - | 51.8 | - | 12.7 | - | 42.8 | - | 14.8 | - | 39 | 16.8 | 9.3 | - |
| CE5 | 10% FG 5190 | no | 2.8 | - | 14.8 | - | 50.6 | - | 23.8 | - | 34.9 | - | 27.7 | - | 28 | 20.9 | 9.3 | - |

As can be seen from Table 2, films E1 and E2 according to the invention have a high transparency of 93 % and more, a haze of less than 9 %, a clarity of 77 % and more, a gloss of more than 46 %, and an impact resistance of about 13 J/mm before sterilization, and show only a slight decrease of transparency of 2.5 % and 1.6 %, clarity of 3.7 % and 4.9 %, gloss of 11.1 % and 19.8 %, and of impact resistance of 4.5 J/mm and 5 J/mm, respectively, and a slight increase of a haze of 7.2% and 8.1 %, after a sterilization at 129°C, whereas according to Comparative Examples CE1, CE2 and CE3, after sterilization at 129°C, a dramatic increase of haze up to 37.2 % occurs, which means opaqueness. Apart from that, according to Comparative Example CE1, the gloss is reduced from 46.9 % to 8.5 %, for instance. In addition, the films according to the invention have not only the highest gloss and the lowest haze after sterilization at 129°C, but also a better clarity and transparency than the films CE1, CE2 and CE3 and a good impact resistance.

## Claims

1. Use of a polyolefin composition comprising
a) 75 to 98 wt.-% of a heterophasic propylene/alpha-olefin copolymer comprising a polymer or a copolymer of propylene and an alpha-olefin as matrix polymer and a propylene/alpha-olefin rubber copolymer, the XCS-fraction of the heterophasic copolymer being soluble in xylene at +23°C having an intrinsic viscosity, determined according to DIN ISO 1628-1 (October 1999) in decaline at 135 °C, of less than 2 dl/g, and,
b) 2 to 25 wt.-% of an ethylene homopolymer having a melt flow rate (MFR₂), determined under a load of 2.16 kg and at a temperature of 190°C, of more than 10 g/10min and a density, determined according to ISO 1183, of less than 0.930 g/cm³
for the manufacture of an article having a high transparency and impact resistance which has been subjected to a heat treatment for sterilization as such that
the article has a transparency of more than 90 % after a heat treatment at 129°C for two hours, and a decrease of transparency of not more than 3 % after heat treatment at 129°C for two hours compared with the transparency before the heat treatment, and that
the article has an impact resistance of more than 8 J/mm after a heat treatment at 129°C for two hours, and a decrease of impact resistance of not more than 5 J/mm after heat treatment at 129°C for two hours compared with the impact resistance before the heat treatment.

2. The use according to claim 1, wherein the polyolefin composition comprises 85 to 95 wt.-% of the heterophasic copolymer a) and 5 to 15 wt.-% of the ethylene homopolymer b).

3. The use according to claim 1, wherein the matrix polymer is a random propylene/ethylene copolymer with at least 3 mol-% ethylene comonomer.

4. The use according to claim 3, wherein the ethylene comonomer is not more than 15 mol-%.

5. The use according to claim 1, wherein the density, determined according to ISO 1183, of the ethylene homopolymer b) is at least 0.910 g/cm³.

6. The use according to any one of the preceding claims, wherein the polyolefin composition further comprises 0.00001 to 1.0 wt.-% of an alpha-nucleating agent.

7. The use according to any one of the preceding claims, wherein the polyolefin composition further comprises one or more conventional additives and/or stabilizers.

8. The use according to any one of the preceding claims, wherein the article has a haze of less than 20 % after a heat treatment at 129°C for two hours, and an increase of haze of not more than 10 % after a heat treatment at 129°C for two hours, compared with the haze before the heat treatment.

9. The use according to any one of the preceding claims, wherein the article has a gloss of more than 20 % after a heat treatment at 129°C for two hours, and a decrease of gloss of not more than 25 % after a heat treatment at 129°C for two hours, compared with the gloss before the heat treatment.

10. The use according to any one of the preceding claims, wherein the article has a clarity of more than 70 % after a heat treatment at 129°C for two hours, and a decrease of clarity of less than 10 % after a heat treatment at 129°C for two hours, compared with the clarity before the heat treatment.

11. The use according to any one of the preceding claims, wherein the article is a medical article.

12. The use according to claim 11, wherein the medical article is a container.

13. The use according to claim 11, the medical article is a bag.

## Patentansprüche

1. Verwendung einer Polyolefin-Zusammensetzung, welche umfasst
(a) 75 bis 98 Gew.-% eines heterophasischen Propylen/Alpha-Olefin Copolymers, welches ein Polymer oder ein Copolymer von Propylen und ein Alpha-Olefin als Matrixpolymer und ein Propylen/Alpha-Olefin Gummi-Copolymer, die Löslichkeit der XCS-Fraktion des heterophasischen Copolymers in Xylen bei +23 °C mit einer intrinsischen Viskosität, bestimmt gemäß DIN ISO 1628-1 (Oktober 1999) in Decalin bei 135 °C, von weniger als 2 dl/g ,umfasst, und,
(b) 2 bis 25 Gew.-% eines Ethylenhomopolymers welches eine Schmelzflussrate ((MFR₂), bestimmt unter Last von 2,16 kg und bei einer Temperatur von 190 °C, von mehr als 10 g/10 min und eine Dichte, bestimmt gemäß ISO 1183, von weniger als 0,930 g/cm³ hat
für die Herstellung eines Artikels der eine hohe Transparenz und Schlagbeständigkeit hat, der einer Behandlung mit Hitze zur Sterilisation unterzogen wurde, so daß
der Artikel eine Transparenz von über 90% nach einer Behandlung mit Hitze bei 129°C für zwei Stunden, und eine Abnahme der Transparenz von nicht mehr als 3% nach einer Behandlung mit Hitze bei 129°C für zwei Stunden, im Vergleich zur Transparenz vor der Behandlung mit Hitze hat, und daß
der Artikel eine Schlagbeständigkeit von mehr als 8 J/mm nach einer Behandlung mit Hitze bei 129°C für zwei Stunden, und eine Abnahme der Schlagbeständigkeit von nicht mehr als 5 J/mm nach einer Behandlung mit Hitze bei 129°C für zwei Stunden, im Vergleich zur Schlagbeständigkeit vor der Behandlung mit Hitze hat.

2. Die Verwendung gemäß Anspruch 1, wobei die Polyolefinzusammensetzung 85 bis 95 Gew.-% des heterophasischen Copolymers a) und 5 bis 15 Gew.-% des Ethylenhomopolymers b) enthält.

3. Die Verwendung gemäß Anspruch 1, wobei das Matrix-Copolymer ein zufälliges Propylen/Ethylen Copolymer mit mindestens 3 Mol-% Ethylen-Comonomer ist.

4. Die Verwendung gemäß Anspruch 3, wobei das Ethylen-Comonomer nicht mehr als 15 Mol-% ist.

5. Die Verwendung gemäß Anspruch 1, wobei die Dichte, bestimmt gemäß ISO 1183, des Ethylen-Homopolymers b) mindestens 0,910 g/cm³ ist.

6. Die Verwendung gemäß jedwedem der vorhergehenden Ansprüche, wobei die Polyolefin-Zusammensetzung weiterhin 0,00001 bis 1,0 Gew.-% eines Alpha-Nukleierungsmittels umfasst.

7. Die Verwendung gemäß jedwedem der vorhergehenden Ansprüche, wobei die Polyolefin-Zusammensetzung weiterhin einen oder mehrere herkömmliche Zusätze und/oder Stabilisatoren umfasst.

8. Die Verwendung gemäß jedwedem der vorhergehenden Ansprüche, wobei der Artikel eine Eintrübung von weniger als 20 % nach einer Behandlung mit Hitze bei 129°C für zwei Stunden, und einen Anstieg der Eintrübung von nicht mehr als 10 % nach einer Behandlung mit Hitze bei 129°C für zwei Stunden, im Vergleich zur Eintrübung vor der Behandlung mit Hitze, hat.

9. Die Verwendung gemäß jedwedem der vorhergehenden Ansprüche, wobei der Artikel einen Glanz von mehr als 20 % nach einer Behandlung mit Hitze bei 129°C für zwei Stunden, und eine Abnahme des Glanzes von nicht mehr als 25 % nach einer Behandlung mit Hitze bei 129°C für zwei Stunden, im Vergleich zum Glanz vor der Behandlung mit Hitze, hat.

10. Die Verwendung gemäß jedwedem der vorhergehenden Ansprüche, wobei der Artikel eine Durchsichtigkeit von mehr als 70 % nach einer Behandlung mit Hitze bei 129°C für zwei Stunden, und eine Abnahme der Durchsichtigkeit von weniger als 10 % nach einer Behandlung mit Hitze bei 129°C für zwei Stunden, im Vergleich zur Durchsichtigkeit vor der Behandlung mit Hitze, hat.

11. Die Verwendung gemäß jedwedem der vorhergehenden Ansprüche, wobei der Artikel ein medizinischer Artikel ist.

12. Die Verwendung gemäß Anspruch 11, wobei der medizinische Artikel ein Behälter ist.

13. Die Verwendung gemäß Anspruch 11, der medizinische Artikel ist ein Beutel.

## Revendications

1. Utilisation d'une composition de polyoléfine comprenant :
a) de 75 à 98 % en poids d'un copolymère de propylène/alpha-oléfine hétérophasique comprenant un polymère ou un copolymère de propylène et d'une alpha-oléfine en tant que matrice polymère et un copolymère de caoutchouc de propylène/alpha-oléfine, la fraction XCS du copolymère hétérophasique étant soluble dans du xylène à +23 °C, ayant une viscosité intrinsèque, déterminée selon la norme DIN ISO 1628-1 (octobre 1999) dans de la décaline à 135 °C, de moins de 2 dl/g, et
b) de 2 à 25 % en poids d'un homopolymère d'éthylène ayant un indice de fluidité (MFR₂) déterminé sous une charge de 2,16 kg et à une température de 190 °C, de plus de 10g/10 min et une densité, déterminée selon la norme ISO 1183, de moins de 0,930 g/cm³
pour la fabrication d'un article ayant une transparence et une résistance à l'impact élevées, qui a été soumis à un traitement thermique pour une stérilisation de sorte que
l'article a une transparence de plus de 90 % après un traitement thermique à 129 °C pendant deux heures, et une diminution de la transparence de pas plus de 3 % après un traitement thermique à 129 °C pendant deux heures, par comparaison avec la transparence avant le traitement thermique, et que
l'article a une résistance à l'impact de plus de 8 J/mm après un traitement thermique à 129 °C pendant deux heures, et une diminution de la résistance à l'impact de pas plus de 5 J/mm après un traitement thermique à 129 °C pendant deux heures, par comparaison avec la résistance à l'impact avant le traitement thermique.

2. Utilisation selon la revendication 1, dans laquelle la composition de polyoléfine comprend de 85 à 95 % en poids du copolymère hétérophasique a) et de 5 à 15 % en poids de l'homopolymère d'éthylène b).

3. Utilisation selon la revendication 1, dans laquelle la matrice polymère est un copolymère de propylène/éthylène aléatoire avec au moins 3 % en moles de comonomère d'éthylène.

4. Utilisation selon la revendication 3, dans laquelle le comonomère d'éthylène ne représente pas plus de 15 % en moles.

5. Utilisation selon la revendication 1, dans laquelle la densité, déterminée selon la norme ISO 1183, de l'homopolymère d'éthylène b) est d'au moins 0,910 g/cm³.

6. Utilisation selon l'une quelconque des revendications précédentes, dans laquelle la composition de polyoléfine comprend en outre de 0,00001 à 1,0 % en poids d'un agent d'alpha-nucléation.

7. Utilisation selon l'une quelconque des revendications précédentes, dans laquelle la composition de polyoléfine comprend en outre un ou plusieurs additifs et/ou stabilisants classiques.

8. Utilisation selon l'une quelconque des revendications précédentes, dans laquelle l'article a un trouble de moins de 20 % après un traitement thermique à 129 °C pendant deux heures, et une augmentation du trouble de pas plus de 10 % après un traitement thermique à 129 °C pendant deux heures, par comparaison avec le trouble avant le traitement thermique.

9. Utilisation selon l'une quelconque des revendications précédentes, dans laquelle l'article a une brillance de plus de 20 % après un traitement thermique à 129 °C pendant deux heures, et une diminution de brillance de pas plus de 25 % après un traitement thermique à 129 °C pendant deux heures, par comparaison avec la brillance avant le traitement thermique.

10. Utilisation selon l'une quelconque des revendications précédentes, dans laquelle l'article a une clarté de plus de 70 % après un traitement thermique à 129 °C pendant deux heures, et une diminution de clarté de moins de 10 % après un traitement thermique à 129 °C pendant deux heures, par comparaison avec la clarté avant le traitement thermique.

11. Utilisation selon l'une quelconque des revendications précédentes, dans laquelle l'article est un article médical.

12. Utilisation selon la revendication 11, dans laquelle l'article médical est un contenant.

13. Utilisation selon la revendication 11, l'article médical étant un sac.
